Europäisches Patentamt

European Patent Office

Office européen des brevets

(11) Publication number: **0 020 822**
**B1**

(12) **EUROPEAN PATENT SPECIFICATION**

(45) Date of publication of patent specification: **16.02.83**

(51) Int. Cl.³: **H 04 Q 3/00**

(21) Application number: **79200803.9**

(22) Date of filing: **24.12.79**

(54) Current detector circuit.

(30) Priority: **21.06.79 ES 244069 U**

(43) Date of publication of application:
**07.01.81 Bulletin 81/1**

(45) Publication of the grant of the patent:
**16.02.83 Bulletin 83/7**

(84) Designated Contracting States:
**AT BE CH DE FR GB IT LU NL SE**

(56) References cited:
**AU - B - 463 274**
**FR - A - 1 420 563**
**FR - A - 2 172 537**
**FR - A - 2 216 731**
**GB - A - 1 504 062**

(73) Proprietor: **AMPER S.A.**
**Calle Torrelaguna, no 75**
**Madrid 27 (ES)**

(72) Inventor: **Gonzalez, César Rico**
**Pio Baroja, 2**
**Madrid (ES)**

(74) Representative: **Beem, André et al,**
**Bureau GEVERS S.A. 7, rue de Livourne**
**B-1050 Brussels (BE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

# Current detector circuit

The invention refers to a detector circuit for detecting the presence or the absence of direct current in a circuit, preferably for telephone equipment, comprising windings connected in series on said circuit to be detected.

The detection system is based on the property that magnetic materials are saturated when excess excitation is applied thereto.

Such a detector circuit is disclosed in FR—A—2.216.731, said windings being arranged around a core while forming a magnetic field and a resistor varying with said field.

Such detector circuits, for detecting a flow of either direct current or alternating current, are known (see for instance also AU—B—463274).

The object of present invention is to provide a circuit for detecting the presence or the absence of electric direct current, reduced in size thereby facilitating its introduction in a reduced volume, while providing at the same time insulation between the metering circuit and the circuit where it is desired to detect the current.

Consequently said circuit finds an application in auxiliary telephone equipment, such as markers, answering devices, etc., which should be controlled in some way by the telephone connected to the line. The "hungup" and "unhooked" condition of the telephone is detected by the circuit which gives due orders to the auxiliary equipment.

According to the invention, a detector circuit as disclosed in the preamble of the claim comprises two identical transformers with the primary windings thereof connected in series in the same direction and said windings in said circuit to be detected, as secondary windings, which are connected in series in opposition, the primary windings comprising the load of the collector of a NPN transistor, said collector being connected through a resistor to the base of a PNP transistor the emitter of which is connected to the positive supply line and the collector is connected to the negative line through a resistor-condenser cell, the NPN transistor emitter being connected to the negative line through a resistor condenser cell and the NPN transistor base biased by means of a resistive divider connected between the positive and negative lines being fed-back from the collector through two condensers in series, the condenser junction being also connected to the positive line through a resistor, such feed-back connection causing the NPN transistor to work as an oscillator, in such a way that, as direct current passes through the secondary windings, saturation of the transformers will occur, which causes a lowering of the inductance thereof and consequently the stopping of the oscillator in such a way that said PNP transistor does not conduct any more and the positive voltage present at the collector thereof disappears.

The characteristics and the operation of the proposed circuit will be better understood by considering the electrical diagram in the attached drawings sheet.

As mentioned above, transformers T1 and T2 are shown, which are identical and the primary windings N1 of which are connected in series, while the secondary windings N2 are connected in opposition. It is also shown that the primary windings N1 comprise the load of the collector of a transistor Tr1, of NPN type, the base of which is biased through a resistive divider R2—R4, connected to the circuit supply. The transistor emitter, in turn, is connected through resistor R5, which controls the circuit gain, to a resistor-condenser cell, R6—C3, through which it is connected to the negative supply line.

To transistor Tr1, biased as described, is added a feed-back cell, which can cause circuit oscillation. The feed-back, as shown, is taken from the collector of the transistor itself, and through two condensers in series, C1—C2, the junction of which is connected through a resistor R1 to the positive supply line to be fed again to the base of the transistor. Said feed-back cell, together with the collector inductive load, determines the required phase-shift (180°) for the circuit to oscillate.

The A. C. signal present at the collector of the oscillator transistor TR1 is coupled by means of a resistor R7 to the base of another transistor TR2, of PNP type, the emitter of which is connected to the positive supply line. In this way, the half cycles of the signal from the oscillator cause the conduction of transistor TR2 which gives positive pulses at the collector thereof. As said collector is connected to the negative line through a resistor-condenser cell R8—C4 which filters said pulses, there appears at the circuit output (TR2 collector) a D.C. voltage which is practically equal to that voltage supplying the circuit.

The secondary windings of transformers T1 and T2 are connected in series with that circuit in which it is desired to detect the current. Because they are connected in opposition, the oscillator voltages induced therein cancel one another, so that the interferences induced by the oscillator circuit in the circuit in which it is desired to measure the current are cancelled. Besides, in this way, the oscillator is insensitive to the load for which the circuit is designed.

As direct current passes through the secondary windings saturation of the transformers will occur, which causes a lowering of the inductance thereof and consequently the stopping of the oscillator in such a way that transistor TR2 does not conduct any more and the positive voltage present at the collector thereof disappears.

It must be understood that the invention is in no way limited to the above embodiment and that many changes can be made therein without departing from the scope of the invention.

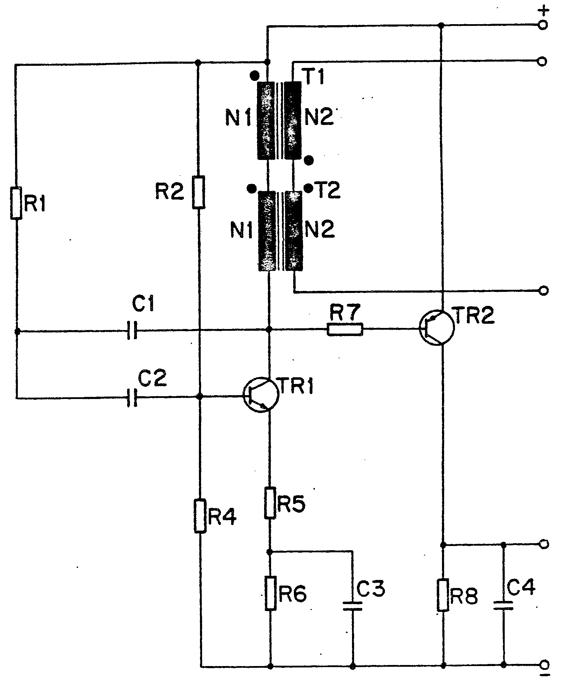

## Claim

Detector circuit for detecting the presence or the absence of direct current in a circuit, preferably for telephone equipment, comprising windings ($N_2$, $N_2$) connected in series in said circuit to be detected, characterized in that it comprises two identical transformers ($T_1$, $T_2$) with the primary windings ($N_1$, $N_1$) thereof connected in series in the same direction and the said windings ($N_2$, $N_2$) in said circuit to be detected, as secondary windings ($N_2$, $N_2$), which are connected in series in opposition, and in that the primary windings ($N_1$, $N_1$) comprise the load of the collector of an NPN transistor ($TR_1$), said collector being connected through a resistor ($R_7$) to the base of a PNP transistor ($TR_2$) the emitter of which is connected to the positive supply line and the collector is connected to the negative line through a resistor-condenser cell ($R_8$, $C_4$), the NPN transistor (TR1) emitter being connected to the negative line through a resistor condenser cell ($R_5$, $R_6$, $C_3$) and the NPN transistor base biased by means of a resistive divider ($R_2$, $R_4$) connected between the positive and negative lines, is fed-back from the collector through two condensers ($C_1$, $C_2$) in series, the condenser junction being also connected to the positive line through a resistor ($R_1$), such feed-back connection causing the NPN transistor ($TR_1$) to work as an oscillator, in such a way that, as direct current passes through the secondary windings, ($N_2$, $N_2$), saturation of the transformers ($T_1$, $T_2$) will occur, which causes a lowering of the inductance thereof and consequently the stopping of the oscillator in such a way that said PNP transistor ($TR_2$) does not conduct any more and the positive voltage present at the collector thereof disappears.

## Revendication

Circuit de détection pour détecter la présence ou l'absence de courant continu dans un circuit, du préférence pour un équipement téléphonique, comprenant des enroulements (N2, N2) connectés en série dans le circuit à détecter, caractérisé en ce qu'il comprend deux transformateurs identiques (T1, T2) dont les enroulements primaires (N1, N1) sont connectés en série dans la même direction et dont les enroulements (N2, N2) dans le circuit à détecter sont, à titre d'enroulements secondaires (N2, N2), connectés en série en opposition, et en ce que les enroulements primaires (N1, N1) constituent la charge du collecteur d'un transistor NPN (Tr1), ce collecteur étant connecté par une résistance (R7) à la base d'un transistor PNP (Tr2) dont l'émetteur est connecté à la ligne d'alimentation positive et le collecteur est connecté à la ligne négative par une cellule résistance-condensateur (R8, C4), l'émetteur du transistor NPN (Tr1) étant connecté à la ligne négative par une cellule résistance-condensateur (R5, R6, C3), la base du transistor NPN, polarisée au moyen d'un diviseur à résistances (R2, R4) connecté entre les lignes positive et négative, présentant une connexion de retour à partir du collecteur par deux condensateurs (C1, C2) en série, la jonction des condensateurs étant également connectée à la ligne positive par une résistance (R1), cette connexion de retour ayant pour effet que le transistor NPN (Tr1) travaille comme un oscillateur, de telle sorte que, lorsque du courant continu passe à travers les enroulements secondaires (N2, N2), il se produit une saturation des transformateurs (T1, T2) qui entraîne un abaissement de leur inductance et par conséquent l'arrêt de l'oscillateur de telle sorte que le transistor PNP (Tr2) n'est plus conducteur et que la tension positive présente à son collecteur disparaît.

## Patentanspruch

1. Detektorkreis zum Feststellen des Vorhandenseins oder Fehlens von Gleichstrom in einem Schaltkreis, vorzugsweise für Telefoneinrichtungen, mit Windungen ($N_2$, $N_2$), die im zu überprüfenden Schaltkreis in Serie verbunden sind, dadurch gekennzeichnet, daß er zwei identische Transformatoren ($T_1$, $T_2$) aufweist, deren Primärwindungen ($N_1$, $N_1$) in gleicher Richtung in Serie verbunden sind und bei denen die Windungen ($N_2$, $N_2$) im zu überprüfenden Schaltkreis die Sekundärwindungen ($N_2$, $N_2$) sind, die entgegengesetzt in Serie verbunden sind, und daß die Primärwindungen ($N_1$, $N_1$) die Ladung des Kollektors eines NPN-Transistors ($TR_1$) aufweisen, wobei der Kollektor über einen Widerstand ($R_7$) mit der Basis eines PNP-Transistors ($TR_2$) verbunden ist, dessen Emitter mit der positiven Leitung und dessen Kollektor über ein Widerstand-Kondensator-Element ($R_8$, $C_4$) mit der negativen Leitung verbunden sind, wobei der Emitter des NPN-Transistors ($TR_1$) über ein Widerstand-Kondensator-Element ($R_5$, $R_6$, $C_3$) mit der negativen Leitung verbunden ist und die Basis des NPN-Transistors über einen zwischen der positiven und der negativen Leitung liegenden Spannungsteiler ($R_2$, $R_4$) vorgespannt ist und vom Kollektor über zwei Kondensatoren ($C_1$, $C_2$) in Serie rückgekoppelt ist, wobei der Kondensator am Schluß ebenfalls mit der positiven Leitung über einer Widerstand ($R_1$) verbunden ist, welche Rückkopplungsverbindung bewirkt, daß der NPN-Transistor ($TR_1$) als Ozsillator arbeitet, derart daß, wenn Gleichstrom durch die Sekundärwindungen ($N_2$, $N_2$) fließt, eine Sättigung der Transformatoren ($T_1$, $T_2$) auftritt, was eine Verringerung der Induktanz und infolgedessen das Anhalten des Oszillators hervorruft, darart daß der PNP-Transistor (TR$_2$) nicht mehr leitet und die positive Spannung an dessen Kollektor verschwindet.